# EUROPÄISCHE PATENTSCHRIFT

(11) **EP 3 532 228 B1**
(45) Veröffentlichungstag und Bekanntmachung des Hinweises auf die Patenterteilung: **22.10.2025**
(21) Anmeldenummer: 17792023.8
(22) Anmeldetag: 26.10.2017
(51) Int. Cl.: B23D 5/02, B23D 13/00

(54) **TIEFLOCHBOHRVERFAHREN**
DEEP-HOLE DRILLING METHOD
PROCÉCÉ DE PERÇAGE PROFOND

(30) Priorität: 26.10.2016 DE 102016012907
(43) Veröffentlichungstag der Anmeldung: 04.09.2019
(73) Patentinhaber: Schmidt + Clemens GmbH + Co. KG, 51789 Lindlar (DE)
(72) Erfinder: LATTNER, Detlev, 51709 Marienheide (DE)
(74) Vertreter: Hoffmann Eitle
(86) Internationale Anmeldenummer: PCT/EP2017/077476
(87) Internationale Veröffentlichungsnummer: WO 2018/078030

(56) Entgegenhaltungen:
- EP-A2- 0 376 204
- WO-A1-2012/154866
- FR-A- 1 396 349
- US-A- 5 439 335
- US-A1- 2003 019 533

## Beschreibung

Die Erfindung betrifft ein Tieflochbohrverfahren zum Herstellen eines Rohrs.

Das Tiefbohren oder Tieflochbohren ist ein spanendes Bearbeitungsverfahren zur Herstellung und Bearbeitung von Bohrungen, deren Durchmesser zwischen d = 0,2 bis 2000mm betragen und deren Bohrungstiefe üblicherweise größer als das 3-fache des Durchmessers sind.

Aus WO 2012/154866 A1 ist ein Tieflochbohrverfahren zum Herstellen eines Rohrs mit einem Innenprofil, das zumindest eine sich helixförmig entlang der Innenseite des Rohrs erstreckende Ausnehmung aufweist, nämlich n sich helixförmig entlang der Innenseite des Rohrs erstreckende Ausnehmungen aufweist, bekannt, bei dem mit einer Tieflochbohrmaschine ein Werkzeug, das einen sich entlang einer Längsachse erstreckenden Grundkörper und eine am Außenumfang des Grundkörpers (2) angeordnete Schneide aufweist, durch das Innere des Rohrs gezogen wird und dabei um seine Längsachse gedreht wird, so dass die Schneide einen Schnitt entlang einer helixförmigen Schnittlinie auf der Innenseite des Rohrs vollführt.

Aus US 2003/0019533A1 ist Tieflochbohrverfahren zum Herstellen eines Rohrs mit einem Innenprofil, das zumindest eine sich helixförmig entlang der Innenseite des Rohrs erstreckende Ausnehmung aufweist, wobei das Rohr ein Schleudergussrohr (5) ist und das Innenprofil mehrere, nämlich n sich helixförmig entlang der Innenseite des Rohrs erstreckende Ausnehmung aufweist, bekannt, bei dem mit einer Tieflochbohrmaschine ein Werkzeug, das einen sich entlang einer Längsachse erstreckenden Grundkörper und n am Außenumfang des Grundkörpers angeordnete Schneiden aufweist, durch das Innere des Rohrs gestoßen und dabei um seine Längsachse gedreht wird, so dass die Schneiden einen Schnitt entlang einer helixförmigen Schnittlinie auf der Innenseite des Rohrs vollführen.

Aus EP 1 525 289 B9 ist ein Rippenrohr zum thermischen Spalten von Kohlenwasserstoffen bekannt, das bezogen auf die Rohrachse geneigte, wendelförmig verlaufende Innenrippen aufweist.

Aus WO 2010/043375 A1 ist eine Nickel-Chrom-Legierung mit hoher Oxidations- und Aufkohlungsbeständigkeit, Zeitstandsfestigkeit und Kriechbeständigkeit aus 0,4 bis 0,6% Kohlenstoff, 28 bis 33% Chrom, 15 bis 25% Eisen, 2 bis 6% Aluminium, bis 2% Silizium, bis 2% Mangan, bis 1,5% Niob, bis 1,5% Tantal, bis 1,0% Wolfram, bis 1,0% Titan, bis 1,0% Zirkonium, bis 0,5% Yttrium, bis 0,5% Cer, bis 0,5% Molybdän, bis 0,1% Stickstoff, Rest Nickel einschließlich erschmelzungsbedingter Verunreinigungen bekannt.

Vor diesem Hintergrund lag der Erfindung die Aufgabe zugrunde, ein Herstellungsverfahren zur Herstellung eines Rohrs mit einem Innenprofil, das sich helixförmig entlang der Innenseite des Rohrs erstreckende Ausnehmung aufweist, vorzuschlagen, dass effizienter als die aus dem Stand der Technik bekannten Verfahren durchgeführt werden kann.

Diese Aufgabe wird durch das Tieflochbohrverfahren gemäß Anspruch 1 gelöst. Vorteilhafte Ausführungsformen sind in den Unteransprüchen und der hier nachfolgenden Beschreibung wiedergegeben.

Mit dem erfindungsgemäßen Tieflochbohrverfahren werden Vorteile erzielt, wenn die Schneiden des Werkzeugs nicht an einer bestimmten Stelle innerhalb des Rohrs allein in Umfangsrichtung bewegt werden und durch radiales Zustellen der Schneiden der an dieser Stelle liegende Abschnitt des Innenprofils erzeugt wird. Die Schnittrichtung der Schneide soll beim Tieflochbohrverfahren nicht mehr allein in Umfangsrichtung erfolgen. Vielmehr schlägt die Erfindung vor, die Schneiden des Werkzeugs helixförmig entlang der Innenseite des Rohrs zu führen und auf diese Weise die sich helixförmig entlang der Innenseite des Rohrs erstreckenden Ausnehmungen zu erzeugen. Dazu schlägt die Erfindung im Rahmen des erfindungsgemäßen Tieflochbohrverfahrens vor, mit einer Tieflochbohrmaschine ein Werkzeug, das einen sich entlang einer Längsachse erstreckenden Grundkörper und n am Außenumfang des Grundkörpers angeordnete Schneiden aufweist, durch das Innere des Rohrs zu ziehen und dabei das Werkzeug um seine Längsachse zu drehen und/oder das Rohr um seine Längsachse zu drehen, so dass die Schneiden einen Schnitt entlang einer helixförmigen Schnittlinie auf der Innenseite des Rohrs vollführen. Alternativ sieht die Erfindung vor, das Rohr mit einer Vorrichtung entlang seiner Längsachse über ein Werkzeug, das einen sich entlang einer Längsachse erstreckenden Grundkörper und n am Außenumfang des Grundkörpers angeordnete Schneiden aufweist, zu stoßen oder zu ziehen und dabei das Rohr um seine Längsachse zu drehen und/oder das Werkzeug um seine Längsachse zu drehen, so dass die Schneiden einen Schnitt entlang einer helixförmigen Schnittlinie auf der Innenseite des Rohrs vollführen.

Das erfindungsgemäßen Tieflochbohrverfahren bietet den Vorteil, dass die Schneiden häufiger das Werkzeug verlassen und dadurch die Möglichkeit besteht, bei den insbesondere bevorzugt eingesetzten Wendeschneidplatten, an denen die Schneiden ausgeführt werden, einen Austausch der Wendeschneidplatten zu ermöglichen, wenn die Schneiden abgenutzt sind. Bei einem Schneiden allein in Umfangsrichtung und einem schrittweise Bewegen des Werkzeugs in axialer Richtung, wenn das Schneiden in Umfangsrichtung an dem jeweiligen Ort beendet ist, führt zu langen Eingriffszeiten der Schneiden in dem Rohr und birgt das Problem, dass bei einem möglicherweise notwendigen Austausch der Schneiden das Werkzeug präzise an die Stelle zurückgefahren werden muss, bei dem der Schneidprozess vor dem Austausch der Schneiden beendet wurde.

Das erfindungsgemäße Verfahren sieht somit während des Schneidens eine überlagerte Rotationsbewegung und Axialbewegung des Werkzeugs relativ zum Rohr vor. Dabei können die Rotationsbewegung und die Axialbewegung derart aufeinander abgestimmt werden, dass sich eine helixförmige Schnittlinie der Schneiden auf der Innenseite des Rohrs ergibt, die die gleiche Steigung aufweist, die die auf der Innenseite des Rohrs herzustellenden, sich helixförmig an der Innenseite des Rohrs erstreckenden Ausnehmungen haben.

Die Erfindung wird unter Verwendung der Begriffe Tieflochbohrverfahren und Tieflochbohren beschrieben. Dabei wird davon ausgegangen, dass diese Begriffe üblicherweise dazu verwendet werden, um ein spanendes Bearbeitungsverfahren, die zur Herstellung und Bearbeitung von Bohrungen, deren Durchmesser zwischen d = 0,2 bis 2000mm betragen und deren Bohrungstiefe üblicherweise größer als das 3-fache des Durchmessers sind, eingesetzt werden. Im Kontext der Beschreibung der Erfindung sollen die Begriffe Tieflochbohrverfahren und Tieflochbohren jedoch so verstanden werden, dass sie allgemein ein Bearbeitungsverfahren beschreiben, mit dem die vorgesehene überlagerte Rotationsbewegung und Axialbewegung des Werkzeugs relativ zum Rohr während des Schneides durchgeführt werden kann. So ist es beispielsweise denkbar, dass das erfindungsgemäße Verfahren mit einer Drehbank oder einer CNC-Maschine durchgeführt wird. Sowohl eine Drehbank als auch eine CNC-Maschine bieten die Möglichkeit, die von der Erfindung überlagerte Rotationsbewegung und Axialbewegung des Werkzeugs relativ zum Rohr während des Schneides durchzuführen. Nur in einer besonders bevorzugten Ausführungsform werden die Begriffe Tieflochbohrverfahren und Tieflochbohren so verstanden, dass sie ein spanendes Bearbeitungsverfahren beschreiben, die zur Herstellung und Bearbeitung von Bohrungen, deren Durchmesser zwischen d = 0,2 bis 2000mm betragen und deren Bohrungstiefe üblicherweise größer als das 3-fache des Durchmessers sind, eingesetzt werden.

Die vorgesehene überlagerte Rotationsbewegung und Axialbewegung des Werkzeugs relativ zum Rohr während des Schneidens kann auf verschiedene Weisen herbeigeführt werden.

Bei dem erfindungsgemäßen Tieflochbohrverfahren wird mit einer Tieflochbohrmaschine das Werkzeug durch das Innere des Rohrs gezogen und dabei um seine Längsachse gedreht, so dass die Schneiden einen Schnitt entlang einer helixförmigen Schnittlinie auf der Innenseite des Rohrs vollführen. Insbesondere bevorzugt wird dabei das Rohr nicht um seine Längsachse gedreht. Erfindungsgemäß wird mit einer Tieflochbohrmaschine das Werkzeug durch das Innere des Rohrs gezogen und dabei das Rohr um seine Längsachse gedreht, so dass die Schneiden einen Schnitt entlang einer helixförmigen Schnittlinie auf der Innenseite des Rohrs vollführen. Insbesondere bevorzugt wird dabei das Werkzeug nicht um seine Längsachse gedreht. Erfindungsgemäß wird mit einer Tieflochbohrmaschine das Werkzeug durch das Innere des Rohrs gezogen und dabei das Rohr um seine Längsachse und das Werkzeug um seine Längsachse gedreht, so dass die Schneiden einen Schnitt entlang einer helixförmigen Schnittlinie auf der Innenseite des Rohrs vollführen. Erfindungsgemäß wird das Rohr mit einer Vorrichtung über das Werkzeug gezogen und dabei das Werkzeug um seine Längsachse gedreht, so dass die Schneiden einen Schnitt entlang einer helixförmigen Schnittlinie auf der Innenseite des Rohrs vollführen. Insbesondere bevorzugt wird dabei das Rohr nicht um seine Längsachse gedreht. Erfindungsgemäß wird das Rohr mit einer Vorrichtung über das Werkzeug gestoßen und dabei das Werkzeug um seine Längsachse gedreht, so dass die Schneiden einen Schnitt entlang einer helixförmigen Schnittlinie auf der Innenseite des Rohrs vollführen. Insbesondere bevorzugt wird dabei das Rohr nicht um seine Längsachse gedreht. Erfindungsgemäß wird das Rohr mit einer Vorrichtung über das Werkzeug gezogen und dabei das Rohr um seine Längsachse gedreht, so dass die Schneiden einen Schnitt entlang einer helixförmigen Schnittlinie auf der Innenseite des Rohrs vollführen. Insbesondere bevorzugt wird dabei das Werkzeug nicht um seine Längsachse gedreht. Erfindungsgemäß wird das Rohr mit einer Vorrichtung über das Werkzeug gestoßen und dabei das Rohr um seine Längsachse gedreht, so dass die Schneiden einen Schnitt entlang einer helixförmigen Schnittlinie auf der Innenseite des Rohrs vollführen. Insbesondere bevorzugt wird dabei das Werkzeug nicht um seine Längsachse gedreht. Erfindungsgemäß wird das Rohr mit einer Vorrichtung über das Werkzeug gezogen und dabei das Rohr um seine Längsachse und das Werkzeug um seine Längsachse gedreht, so dass die Schneiden einen Schnitt entlang einer helixförmigen Schnittlinie auf der Innenseite des Rohrs vollführen. Erfindungsgemäß wird das Rohr mit einer Vorrichtung über das Werkzeug gestoßen und dabei das Rohr um seine Längsachse und das Werkzeug um seine Längsachse gedreht, so dass die Schneiden einen Schnitt entlang einer helixförmigen Schnittlinie auf der Innenseite des Rohrs vollführen.

In einer bevorzugten Ausführungsform sieht das erfindungsgemäße Verfahren vor, dass die sich helixförmig entlang der Innenseite des Rohrs erstreckenden Ausnehmungn durch mehrere Schnitte erzeugt werden, wobei das Werkzeug bei jedem Schnitt durch das Innere des Rohrs gezogen wird und dabei um seine Längsachse gedreht wird und/oder das Rohr um seine Längsachse gedreht wird, so dass die Schneiden den jeweiligen Schnitt entlang einer helixförmigen Schnittlinie auf der Innenseite des Rohrs vollführen. In einer alternativen, ebenfalls bevorzugten Ausführungsform wird das Rohr bei jedem Schnitt über das Werkzeug gezogen oder gestoßen und dabei das Rohr um seine Längsachse gedreht und/oder das Werkzeug um seine Längsachse gedreht, so dass die Schneiden den jeweiligen Schnitt entlang einer helixförmigen Schnittlinie auf der Innenseite des Rohrs vollführen. Auch dieses Vorgehen ermöglicht es, die Schneiden möglichst wenig zu belasten, indem die Materialabnahme pro Schnitt kleingehalten und die Ausnehmungen in mehreren Schnitten hergestellt werden. In einer bevorzugten Ausführungsform werden die Ausnehmung mit mindestens drei, insbesondere bevorzugt mit mindestens vier, insbesondere bevorzugt mit mindestens fünf und ganz besonders bevorzugt mit mindestens sechs Schnitten erzeugt.

In einer bevorzugten Ausführungsform der vorbeschriebenen Ausführungsform, bei der die Ausnehmungen mit mehreren Schnitten erzeugt werden, wird der radiale Abstand der Schneide relativ zur Längsachse des Grundkörpers zwischen einem ersten Schnitt und einem zweiten Schnitt geändert. Dadurch können die Schneiden auf die zunehmende Tiefe der Ausnehmungen angepasst werden.

Ergänzend oder alternativ kann in einer bevorzugten Ausführungsform vorgesehen sein, die Schneiden des Werkzeugs durch Wendeschneidplatten bereitzustellen und die Wendeschneidplatten zwischen einem ersten Schnitt und einem zweiten Schnitt zu ändern. Der Begriff "Schneide" in der vorliegenden Erfindungsbeschreibung ist somit nicht auf eine konkrete Schneide an einem Werkzeug beschränkt, sondern wird allgemein dazu verwendet, die sich in dem jeweiligen Verfahrensschritt gerade an dem Werkzeug befindliche Schneide zu beschreiben.

In einer bevorzugten Ausführungsform wird ein erster Schnitt mit einer ersten Schneidengeometrie und ein zweiter Schnitt mit einer zweiten Schneidengeometrie durchgeführt. Insbesondere bevorzugt werden Wendeschneidplatten aus der Gruppe mit den Typenbezeichnungen RNMG 160500, RPMT 160500, RCMT 160500 oder RDMT 160500 verwendet.

In einer bevorzugten Ausführungsform führt der jeweils zu vollführende Schnitt von einem Ende des Rohrs zum anderen Ende des Rohrs. Zwar sind Ausführungsformen denkbar, bei denen ein Rohr mit einer helixförmigen Ausnehmung auf der Innenseite des Rohres hergestellt werden soll, die sich nur über einen Teil der Längserstreckung des Rohres erstreckt, beispielsweise an den jeweiligen Enden des Rohres Endzonen ohne Ausnehmung vorgesehen sind. Es werden jedoch insbesondere bevorzugt Rohre mit einer helixförmigen Ausnehmung auf der Innenseite des Rohres hergestellt, die sich über das gesamte Rohr erstreckt. Das birgt zudem den Vorteil zu Beginn des jeweiligen Schnitts, wenn die Schneide zu Beginn eines Schnitts in Eingriff mit dem Material des Rohrs kommt.

In dem jeweiligen Verfahrensschritt werden mehrere Ausnehmungen des Rohrs hergestellt. Das Rohr weist n sich helixförmig entlang der Innenseite des Rohrs erstreckende Ausnehmungen auf. Das erfindungsgemäße Verfahren sieht hierfür vor, mit der Tieflochbohrmaschine das Werkzeug, das einen sich entlang einer Längsachse erstreckenden Grundkörper und n am Außenumfang des Grundkörpers angeordnete Schneiden aufweist, durch das Innere des Rohrs zu ziehen und dabei um seine Längsachse zu drehen und/oder das Rohr um seine Längsachse zu drehen, so dass die Schneiden jeweils einen Schnitt entlang einer helixförmigen Schnittlinie auf der Innenseite des Rohrs vollführen. In einer alternativen Ausführungsform wird das Rohr mit einer Vorrichtung entlang seiner Längsachse über ein Werkzeug, das einen sich entlang einer Längsachse erstreckenden Grundkörper und n am Außenumfang des Grundkörpers angeordnete Schneide aufweist, gestoßen oder gezogen und dabei das Rohr um seine Längsachse gedreht und/oder das Werkzeug um seine Längsachse gedreht, so dass die Schneiden jeweils einen Schnitt entlang einer helixförmigen Schnittlinie auf der Innenseite des Rohrs vollführen. Die jeweilige Ausnehmungen der n Ausnehmungen auch durch mehrere Schnitte erzeugt werden, wobei das Werkzeug bei jedem Schnitt durch das Innere des Rohrs gezogen wird und dabei um seine Längsachse gedreht wird, so dass die Schneide den jeweiligen Schnitt entlang einer helixförmigen Schnittlinie auf der Innenseite des Rohrs vollführt. Zwar ist in einer nicht zur Erfindung gehörenden Variante denkbar, bei einem Rohr mit n sich helixförmig entlang der Innenseite des Rohrs erstreckenden Ausnehmungen diese Ausnehmungen nacheinander herzustellen (ggf. unter Durchführung mehrerer Schnitte pro Ausnehmung). Die Bearbeitungszeiten reduzieren sich jedoch, wenn pro Arbeitsschritt mehrere Schnitte gleichzeitig durchgeführt werden. In einer bevorzugten Ausführungsform ist die Zahl n der Ausnehmungen des Rohrs >3. Es ist nicht zwingend, dass pro Arbeitsschritt an den herzustellenden Ausnehmungen des Rohrs gleichzeitig gearbeitet wird. So ist es beispielsweise denkbar, ein Rohr mit sechs sich helixförmig entlang der Innenseite des Rohrs erstreckenden Ausnehmungen so zu bearbeiten, dass mit einem Werkzeug, das einen sich entlang einer Längsachse erstreckenden Grundkörper und drei am Außenumfang des Grundkörpers angeordnete Schneiden aufweist, in einer ersten Abfolge von Arbeitsschritten nur drei der sechs Ausnehmungen herzustellen und dann in einer zweiten Abfolge von Arbeitsschritten die verbleibenden drei Ausnehmungen der sechs Ausnehmungen herzustellen. Auch ist es denkbar, zunächst beim ersten Durchfahren des Rohres die jeweils ersten Schnitte für die ersten drei Ausnehmungen durchzuführen, beim zweiten Durchfahren des Rohres die jeweils ersten Schnitte für die zweiten drei Ausnehmungen durchzuführen, um dann bei einem dritten Durchfahren - ggf. nach einem Wechsel einer eine Schneide aufweisenden Wendeschneidplatte - den jeweils zweiten Schnitt für die ersten drei Ausnehmung durchzuführen, um bei einem vierten Durchfahren des Rohres die jeweils zweiten Schnitte für die zweiten drei Ausnehmungen durchzuführen.

In einer bevorzugten Ausführungsform wird ein Bohröl oder Kühlschmiermittel in das Innere des Rohrs eingebracht, das entgegen der Zug- bzw. der Schubrichtung des Werkzeugs durch das Rohr strömt. Das Bohröl oder Kühlschmiermittel dient insbesondere dazu, Späne aus dem Inneren des Rohrs zu entfernen und/oder das Werkzeug und/oder das Werkstück zu kühlen und/oder zu schmieren.

In einer bevorzugten Ausführungsform wird der radiale Abstand der Schneide relativ zur Längsachse des Körpers nach Beenden eines ersten Schnitts verringert (die Schneide wird nach innen in Richtung auf die Längsachse des Grundkörpers verlagert), der Grundkörper wird erneut in das Rohr eingeführt, bis er sich in der Ausgangsposition befindet, von wo aus der nächste Schnitt durchgeführt werden soll, woraufhin der radiale Abstand der Schneide relativ zur Längsachse des Grundkörpers wieder vergrößert wird und - in einer bevorzugten Ausführungsform - relativ zum vorherigen Schritt noch größer gewählt wird. Durch dieses "Einfahren" der Schneide, während der Grundkörper wieder zum Ausgangspunkt für den nächsten Schnitt gefahren wird, wird die Gefahr reduziert, dass die Schneide mit einem überstehenden Abschnitt auf der Innenseite des Rohrs kollidiert oder mit einem sich möglicherweise noch im Rohr befindlichen Span. Außerdem kann auf diese Weise davon abgesehen werden, den Grundkörper beim Zurückführen zu der Ausgangsposition während der Längsbewegung auch gleichzeitig zu drehen, also quasi den helixförmigen Verlauf der Ausnehmungen wieder zurückzufahren. In einer bevorzugten Ausführungsform wird der Grundkörper nämlich mit "eingefahrenen Schneiden" allein in Längsrichtung bewegt und erst bei Erreichen seiner axialen Ausgangsposition für den nächsten Schnitt durch Rotieren in eine Lage geführt, bei der die Schneide die richtige Ausgangslage für den nächsten Schnitt einnimmt.

In einer bevorzugten Ausführungsform wird der radiale Abschnitt der Schneide relativ zur Längsachse des Grundkörpers während eines Schnitts nicht verändert. Dadurch kann die Konstruktion des Werkzeugs deutlich vereinfacht werden, da auf Mechanismen verzichtet werden kann, die während eines Schnitts eine Zustellbewegung der Schneide durchführen müssen.

In einer bevorzugten Ausführungsform wird das Werkzeug mit einer Geschwindigkeit von mehr als 6m/min, insbesondere bevorzugt von mehr als 9 m/min, durch das Innere des Rohres gezogen bzw. wird das Rohr mit einer Geschwindigkeit von mehr als 6m/min, insbesondere bevorzugt von mehr als 9 m/min, über das Werkzeug gestoßen oder gezogen. Es hat sich gezeigt, dass mit höheren Geschwindigkeiten eine größere Ruhe des Schneidvorgangs erreicht werden kann, insbesondere geringere Vibrationen des Werkzeugs, des Rohrs und/oder der Schneiden. Dies gilt besonders bei Werkstücken (Rohren) mit zähen Werkstoffen. Die Geschwindigkeitsangabe bezieht sich insbesondere auf die lineare Komponente der Bewegung, also die Geschwindigkeit der Bewegung in Richtung der Längsachse des Rohres bzw. des Werkzeugs.

Das bei dem erfindungsgemäßen Verfahren einsetzbare Werkzeug für eine Tieflochbohrmaschine weist einen sich entlang einer Längsachse erstreckenden Grundkörper und zumindest eine am Außenumfang des Grundkörpers angeordnete Schneide auf. Insbesondere bevorzugt ist der Grundkörper rohrförmig ausgeführt.

Das Werkzeug weist mehrere, insbesondere mehr als drei am Außenumfang des Grundkörpers angeordnete Schneiden auf.

In einer bevorzugten Ausführungsform sind mindestens zwei Schneiden auf gleicher Höhe entlang der Längserstreckung des Grundkörpers, aber an unterschiedlichen Positionen entlang des Umfangs des Grundkörpers angeordnet. Insbesondere bevorzugt sind Schneiden, die auf gleicher Höhe entlang der Längserstreckung des Grundkörpers, aber an unterschiedlichen Positionen entlang des Umfangs des Grundkörpers angeordnet sind, symmetrisch über den Umfang des Grundkörpers verteilt. In einer bevorzugten Ausführungsform ist die Schneidengeometrie der Schneiden, die auf gleicher Höhe entlang der Längserstreckung des Grundkörpers, aber an unterschiedlichen Positionen entlang des Umfangs des Grundkörpers angeordnet sind, gleich.

In einer bevorzugten Ausführungsform sind mindestens zwei Schneiden auf unterschiedlicher Höhe entlang der Längserstreckung des Grundkörpers und an unterschiedlichen Positionen entlang des Umfangs des Grundkörpers angeordnet. Insbesondere bevorzugt sind zwei Schneiden auf unterschiedlicher Höhe entlang der Längserstreckung des Grundkörpers und derart an unterschiedlichen Positionen entlang des Umfangs des Grundkörpers angeordnet, dass sie auf einer helixförmigen Linie liegen. Insbesondere bevorzugt ist die Position der zweiten Schneide um weniger als 90° um die Längsachse gedreht relativ zur Position der ersten Schneide, insbesondere bevorzugt um weniger als 45°. In einer bevorzugten Ausführungsform ist die Schneidengeometrie der Schneiden, die auf unterschiedlicher Höhe entlang der Längserstreckung des Grundkörpers, aber an unterschiedlichen Positionen entlang des Umfangs des Grundkörpers angeordnet sind, gleich. In einer alternativen Ausführungsform ist die Schneidengeometrie der Schneiden, die auf unterschiedlicher Höhe entlang der Längserstreckung des Grundkörpers, aber an unterschiedlichen Positionen entlang des Umfangs des Grundkörpers angeordnet sind, unterschiedlich. Auch sind unterschiedliche Schneidengeometrien denkbar, beispielsweise eine Schneide, beispielsweise die vordere Schneide mit unterbrochener Geometrie und eine andere Schneide, beispielsweise die folgende Schneide mit voller, geschlossener Geometrie.

Die Schneide ist an einer Wendeschneidplatte ausgeführt, wobei die Wendeschneidplatte lösbar als Teil einer Kassette vorgesehen ist. Insbesondere bevorzugt ist eine Wendeschneidplatte mit einem Teil der Kassette verschraubt.

Die Kassette ist relativ zum Grundkörper beweglich ausgeführt. In einer bevorzugten Ausführungsform ist die Kassette am Umfang genau geschliffen und wird in einer eingearbeiteten Tasche im Grundkörper des Werkzeugs geführt. Die Kassetten können in einer bevorzugten Ausführungsform in den Taschen in eine Einstellrichtung gleiten.

In einer bevorzugten Ausführungsform kann die Kassette entlang einer schiefen Ebene, die in einem Winkel zur Längsachse des Grundkörpers steht, verschoben werden. Dadurch kann eine Einstellbewegung der Schneide erfolgen und der radiale Abstand der Schneide relativ zur Längsachse des Grundkörpers geändert werden. Das kann in einer bevorzugten Ausführungsform dadurch erreicht werden, dass der Grund einer Tasche im Grundkörper des Werkzeugs, in dem die Kassette angeordnet wird, in einem Winkel zur Längsachse des Grundkörpers verläuft. Dies kann in einer alternativen Ausführungsform dadurch erreicht werden, dass die Taschen im Grundkörper des Werkzeugs keinen Grund aufweisen (nach unten offen sind) und die in der Tasche angeordnete Kassette durch eine im Innern des Grundkörpers angeordnete Schubstange abgestützt wird, wobei die Schubstange auf ihrem Außenumfang im Winkel zur Längsachse des Grundkörpers verlaufende Oberflächenabschnitte aufweist, auf denen sich die Kassette abstützt. Wird die Schubstange relativ zu den Taschen bewegt, so bewegt sich die Kassette entlang des im Winkel zur Längsachse des Grundkörpers verlaufenden Oberflächenabschnitts und ändert damit ihren Abstand zur Längsachse des Grundkörpers.

In einer bevorzugten Ausführungsform ist eine Stabfeder vorgesehen, die die Kassette in Richtung der Längsachse des Grundkörpers drückt. Alternativ oder ergänzend kann die Kassetten über eine in einer schiefen Ebene der Schubstange eingebrachten T-Nut zwangsgeführt werden.

In einer bevorzugten Ausführungsform ist ein Einstellmechanismus zur Lage einer bezüglich des Grundkörpers beweglichen Kassette relativ zum Grundkörper vorgesehen. Der Einstellmechanismus weist insbesondere bevorzugt einen Einstellstab, beispielsweise eine Schubstange auf, auf dessen Außenoberfläche sich eine in einer Tasche befindliche Kassette abstützt. Es kann ein separater Antrieb vorgesehen sein, mit dem die Lage des Einstellstabs relativ zum übrigen Teil des Grundkörpers geändert werden kann. Dadurch wird eine automatische Einstellung der Lage des Einstellstabs relativ zum Grundkörper möglich. Alternativ kann eine handbetätigte Einstellmöglichkeit vorgesehen sein.

In einer bevorzugten Ausführungsform ist eine am Außenumfang des Grundkörpers vorgesehene Stützplatte vorgesehen. Mit dieser kann die Lage des Grundkörpers innerhalb des Rohrs während der Schnittbewegung festgelegt werden. In einer bevorzugten Ausführungsform sind über den Umfang verteilt mehrere Stützplatten vorgesehen. In einer bevorzugten Ausführungsform ist an einem Ende des Werkzeugs eine erste Gruppe von über den Umfang verteilten Stützplatten und am gegenüberliegenden Ende des Werkzeugs eine zweite Gruppe von über den Umfang verteilten Stützplatten vorgesehen.

In einer bevorzugten Ausführungsform sind die Stützplatten in Richtung radial zum Grundkörper federnd gelagert. Die federnde Lagerung kann durch Federn, beispielsweise Blattfedern oder Spiralfedern, erreicht werden, die unterhalb der Stützplatte angeordnet sein können. Ebenso ist es denkbar, die federnde Lagerung durch Fluidpolster, beispielsweise Gas- oder Hydraulikpolster, zu erreichen, die unterhalb der Stützplatte angeordnet sind. Die federnde Lagerung der Stützplatten bietet den Vorteil, dass die Stützplatten in Abhängigkeit von radial auf sie wirkenden Kräften ihre Lage verändern können. Das ermöglicht zum einen ein Ausweichen der Stützplatten bei Spänen. Es ermöglicht aber bei mehreren über den Umfang verteilten Stützplatten eine Zentrierfunktion. Dadurch kann das Werkzeug sich in dem Rohr selbstzentrieren. Das Werkzeug wird hinsichtlich seiner Lage toleranter gegenüber Maßabweichungen des Rohrs, insbesondere hinsichtlich eines Durchbiegens oder hinsichtlich Abweichungen vom kreisförmigen Querschnitt. Das Werkzeug wird durch die Stützplatten schwimmend im Rohr gehalten.

In einer besonders bevorzugten Ausführungsform weist das Werkzeug eine Spannzangeneinheit auf, insbesondere bevorzugt eine erste Spannzangeneinheit an einem Ende des Werkzeugs und eine zweite Spannzangeneinheit am zweiten Ende des Werkzeugs. Die Spannzangeneinheit weist mindestens drei, insbesondere bevorzugt mehr als drei Spannzangen auf, die jeweils die Funktion einer Stützplatte übernehmen. Die jeweilige Spannzange ist beweglich am Außenumfang des Grundkörpers befestigt, insbesondere um eine in Umfangsrichtung des Grundkörpers verlaufende Schwenkachse schwenkbar gelagert. Ferner weist die Spannzangeneinheit zu jeder Spannzange ein Gegenstück auf, das ebenfalls mit dem Außenumfang des Grundkörpers verbunden ist und axial entlang des Außenumfangs bewegt werden kann. Das Gegenstück ist federbelastet, so dass eine axiale Bewegung des Gegenstücks entlang des Außenumfangs des Grundkörpers von einer ersten Position in eine zweite Position die Feder spannt. Die Spannzangen kann mit ihrem freien Ende in Anlage mit dem Gegenstück geschwenkt werden. Dabei ist es insbesondere bevorzugt, wenn das Gegenstück und/oder das freie Ende der Schwenkzange schräg verlaufende Kontaktflächen haben. Der Einsatz von schrägen Kontaktflächen kann bewirken, dass bei einem Schwenken der Spannzange auf den Außenumfang des Grundkörper zu zunächst ein erster Kontakt zwischen dem freien Ende der Spannzange und dem Gegenstück entsteht und bei einem weiteren Schwenken der Spannzange auf den Außenumfang des Grundkörpers zu ein Gleiten des freien Endes der Spannzange am Gegenstück entlang eine axiale Bewegung des Gegenstücks bewirkt, die die Feder vorspannt (das Gegenstück wird gegen die Feder zurückgeschoben). Auf diese Weise kann bei einer Spannzangeneinheit die Spannzange die Funktion einer in radialer Richtung federnd gelagerten Stützplatte übernehmen. Durch die Feder wird auf das Gegenstück eine Rückstellkraft ausgeübt, die durch die schräg verlaufende Kontaktfläche in eine radial wirkende Rückstellkraft auf die Spannzange übersetzt wird.

In einer bevorzugten Ausführungsform der Spannzangeneinheit sind alle Gegenstücke der Spannzangen auf einem Element zusammengefasst, vorzugsweise auf einem Ring, der axial auf dem Außenumfang des Grundkörpers verschoben werden kann. Dieser Ring ist vorzugsweise mit einer konischen Oberfläche ausgeführt, die die schräg verlaufenden Kontaktflächen der Gegenstücke bereitstellen kann. Insbesondere bevorzugt ist der Ring mit Spiel auf dem Außenumfang des Grundkörpers gelagert, so dass er um eine Achse senkrecht zur Längsachse des Werkzeugs kippen kann. Durch ein Kippen des Rings kann ein hinter dem Ring befindliches Federpaket unterschiedlich stark komprimiert werden, wodurch über den Umfang des Rings verteilt unterschiedlich große axial wirkende Rückstellkräfte erzeugt werden können, die durch die schräg Konusfläche des Rings in unterschiedlich stark wirkende radiale Rückstellkräfte auf die Spannzangen übersetzt werden können.

In einer bevorzugten Ausführungsform der Spannzangeneinheit ist das Gegenstück in eine Vorzugslage vorgespannt. In einer bevorzugten Ausführungsform kann die Vorspannung verändert werden.

In einer bevorzugten Ausführungsform der Spannzangeneinheit weist die Feder des Gegenstücks ein Widerlager auf. In einer bevorzugten Ausführungsform ist die Lage des Widerlagers auf dem Grundkörper axial einstellbar. Durch axiales Verschieben des Widerlagers auf dem Grundkörper kann die Vorspannung eingestellt werden.

In einer bevorzugten Ausführungsform der Spannzangeneinheit werden die Federn der Gegenstücke durch ein einziges hülsenförmiges Federpaket bereitgestellt. Das vorsehen eines hülsenförmigen Federpakets bietet insbesondere im Zusammenwirken mit einem Ring, der die Zusammenfassung aller Gegenstücke darstellt, Vorteile.

Die Verwendung einer Spannzangeneinheit mit verschwenkbaren Spannzangen als Stützplatten bietet den Vorteil, dass eine schräge Fläche, nämlich die radial nach außen weisende Oberfläche der schräg stehenden Spannzange in Kontakt mit der Innenoberfläche des Rohres kommt. Dies bietet insbesondere bei zähen Werkstoffen, die zum Verschmieren neigen Vorteile. Bei zähen Werkstoffen besteht bei feststehenden Leisten die Gefahr, dass eine Kante der feststehenden Leiste sich in das zähe Material gräbt oder Material sich vor dieser Kante aufbaut, was zu einem Abreißen der Leiste führen kann.

In einer bevorzugten Ausführungsform ist am Außenumfang des Grundkörpers eine Düse für ein Bohröl oder Kühlschmiermittel vorgesehen. Insbesondere bevorzugt ist innerhalb des Grundkörpers ein Kanal vorgesehen, der von einem Bohröl- oder Kühlschmiermitteleintritt des Grundkörpers zu der Düse führt. Insbesondere bevorzugt sind mehrere Düsen für ein Bohröl oder Kühlschmiermittel am Außenumfang des Grundkörpers vorgesehen. Ergänzend oder alternativ kann es im Kontext des erfindungsgemäßen Verfahrens vorgesehen sein, den Zwischenraum zwischen dem Außenumfang des Werkzeugs und der Innenseite des Rohrs mit Bohröl oder Kühlschmiermittel zu spülen. Das kann insbesondere dadurch erfolgen, dass das Bohröl oder Kühlschmiermittel an einem Ende des Rohrs in diesen Zwischenraum eingebracht wird und am anderen Ende des Rohrs aus diesem Zwischenraum austritt. In einer bevorzugten Ausführungsform ist die Strömungsrichtung des Bohröls oder Kühlschmiermittels gegenläufig zur Bewegung der Schneide während des Schnitts. Wird demnach die Schneide von einem Ende des Rohrs zum anderen Ende des Rohrs bewegt, so strömt in dieser bevorzugten Ausführungsform das Bohröl oder Kühlschmiermittel von dem anderen Ende des Rohrs zum einen Ende des Rohrs. Alternativ kann es vorgesehen sein, die Strömungsrichtung des Bohröls oder Kühlschmiermittels gleichläufig zur Bewegung der Schneide während des Schnitts zu wählen.

Die mit dem erfindungsgemäßen Verfahren einsetzbare Tieflochbohrmaschine weist ein Werkzeug und einen Linearantrieb für das Werkzeug mit einem Rotationsantrieb für das Werkzeug auf.

In einer bevorzugten Ausführungsform kann der Rotationsantrieb die Schneide in mindestens zwei unterschiedliche Anfangspunkte für einen Schnitt zustellen, wobei sich die Anfangspunkte in ihrer Rotationsposition um die Längsachse unterscheiden. Vorstehend wurde eine Ausführungsform beschrieben, bei der der Grundkörper mit "eingefahrenen Schneiden" allein in Längsrichtung bewegt und erst bei Erreichen seiner axialen Ausgangsposition für den nächsten Schnitt durch Rotieren in eine Lage geführt wird, bei der die Schneide die richtige Ausgangslage für den nächsten Schnitt einnimmt. Wie weit der Grundkörper nach Erreichen der axialen Ausgangsposition rotiert werden muss, hängt von der Form des herzustellenden Helix ab, nämlich in welcher Rotationsposition die Schneide am Ende des Schnitts das Werkstück verlassen hat im Verhältnis zu dem Startpunkt des Helix. Damit die Tieflochbohrmaschine dazu verwendet werden kann, eine Vielzahl unterschiedlicher helixförmiger Ausnehmungen herzustellen, muss sie die Möglichkeit haben, die Schneide in mindestens zwei unterschiedliche Anfangspunkte für einen Schnitt zuzustellen, wobei sich die Anfangspunkte in ihrer Rotationsposition um die Längsachse unterscheiden. Insbesondere bevorzugt kann die Tieflochbohrmaschine die Schneide an jeden Punkt einer 360°-Teilung zustellen, also in insgesamt 360 oder 3600 oder 36000 oder 360000 unterschiedliche Anfangspunkte. Insbesondere bevorzugt kann die Tieflochbohrmaschine die Schneide in mehr als 360 unterschiedliche Anfangspunkte für einen Schnitt zustellen, wobei sich die Anfangspunkte in ihrer Rotationsposition um die Längsachse unterscheiden.

Ein für das erfindungsgemäße Verfahen einsetzbares System weist eine Tieflochbohrmaschine mit einem Werkzeug auf, wobei für das Werkzeug mehrere unterschiedliche Kassetten vorgesehen sind, an denen eine die Schneide aufweisende Wendeschneidplatte lösbar befestigt werden kann. Durch die Form der Kassette, insbesondere durch Variation des Abstandes des Verbindungspunkts der Wendeschneidplatte mit der Kassette (meist das Gewinde, in das eine die Wendeschneidplatte an der Kassette haltende Schraube eingeschraubt wird) von der Fläche, mit der sich die Kassette am Grundkörper abstützt, kann der Abstand des Verbindungspunkts der Wendeschneidplatte zur Längsachse des Grundkörpers und damit der Abstand der Schneide zur Längsachse des Grundkörpers beeinflusst werden. Mit einem solchen System wird es möglich, unter Beibehalten eines Grundkörpers durch Wahl der geeigneten Kassette Rohre mit unterschiedlichen Innendurchmessern zu bearbeiten.

In einer bevorzugten Ausführungsform wird das erfindungsgemäße Verfahren mit der Tieflochbohrmaschine durchgeführt.

In einer bevorzugten Ausführungsform ist das Schleudergussrohr aus einer Legierung hergestellt mit 0,4 bis 0,6% Kohlenstoff, 28 bis 33% Chrom, 15 bis 25% Eisen, 2 bis 6% Aluminium, bis 2% Silizium, bis 2% Mangan, bis 1,5% Niob, bis 1,5% Tantal, bis 1,0% Wolfram, bis 1,0% Titan, bis 1,0% Zirkonium, bis 0,5% Yttrium, bis 0,5% Cer, bis 0,5% Molybdän, bis 0,1% Stickstoff, Rest Nickel einschließlich erschmelzungsbedingter Verunreinigungen. Insbesondere bevorzugt aus einer Legierung, die einzeln und nebeneinander 0,4 bis 0,6% Kohlenstoff, 28 bis 33 % Chrom, 17 bis 22% Eisen, 3 bis 4,5% Aluminium, 0,01 bis 1% Silizium, 0,01 bis 0,5% Mangan, 0,01 bis 1,0% Niob, 0,01 bis 0,5% Tantal, 0,01 bis 0,6% Wolfram, 0,001 bis 0,5% Titan, 0,001 bis 0,3% Zirkonium, 0,001 bis 0,3% Yttrium, 0,001 bis 0,3% Cer, 0,01 bis 0,5% Molybdän, 0,001 bis 0,1% Stickstoff enthält.

Ein mit dem erfindungsgemäßen Verfahren hergestelltes Schleudergussrohr weist ein Innenprofil auf, das zumindest eine sich helixförmig entlang der Innenseite des Rohrs erstreckenden Ausnehmung aufweist, wobei das Schleudergussrohr mit einem erfindungsgemäßen Verfahren hergestellt wurde. Das Schleudergussrohr ist insbesondere gekennzeichnet durch mit einem Neigungswinkel von 20° bis 40°, bezogen auf die Rohrachse geneigte, wendelförmig verlaufende Innenrippen und in Form einer Wellenlinie mit jeweils gleichem Krümmungsradius spiegelbildlich aneinander grenzenden Rippentäler und Rippenkuppen, bei denen der Flankenwinkel (β) der jeweiligen Tangente im Berührungspunkt der beiden Krümmungsradien (R) in Bezug auf die Senkrechte auf den Radius (Ri) des die Rippenkuppen berührenden Kreises im Gipfelpunkt jeweils eines Rippentals bzw. einer Rippenkuppe 16° bis 25° beträgt. Das Schleudergussrohr weist insbesondere bevorzugt eine der in EP 1 525 289 A1 beschriebenen Geometrien der Innenrippen und Rippentäler und Rippenkuppen auf.

Nachfolgend wird die Erfindung anhand von lediglich Ausführungsbeispiele der Erfindung darstellenden Zeichnungen näher erläutert. Darin zeigen:
- Fig. 1: eine schematische, perspektive Ansicht eines Werkzeugs in einem Rohr mit Darstellung der von der Schneide des Werkzeugs zu vollführenden Schnittlinie;
- Fig. 2: eine perspektivische Ansicht eines Werkzeugs;
- Fig. 3: eine perspektivische Ansicht eines Grundkörpers eines Werkzeugs mit einem Abschnitt einer herausgenommener Schubstange;
- Fig. 4: eine Unterbaugruppe des Grundkörpers gemäß Fig. 3 mit einer eingeschobenen Unterbaugruppe der Schubstange;
- Fig. 5: eine schematische Seitenansicht auf eine Tieflochbohrmaschine und
- Fig. 6: eine schematische Seitenansicht einer Spannzangeneinheit.

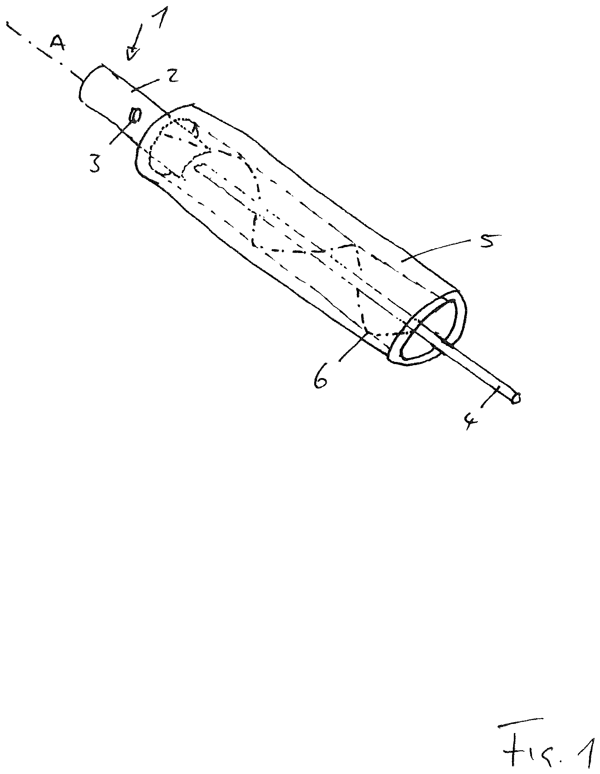

Die Fig. 1 zeigt ein Werkzeug 1 mit einem sich entlang einer Längsachse A erstreckenden Grundkörper 2 und einer auf dem Außenumfang des Grundkörpers 2 angeordnete Schneide 3. In dem Grundkörper 2 ist eine Schubstange 4 vorgesehen, die relativ zum Grundkörper 2 bewegt werden kann. Der Grundkörper 2 des Werkzeugs 1 ist über ein in Fig. 1 nicht dargestelltes Gewinde mit einem (in Fig. 1 nicht dargestellten) Bohrrohr 101 der Tieflochbohrmaschine 100 verbunden. Die Tieflochbohrmaschine 100 kann den Grundkörper 2 über das Bohrrohr 101 sowohl durch das ebenfalls in Fig. 1 dargestellte Schleudergussrohr 5 ziehen, als auch während der Zugbewegung drehen. Mit der strichpunktierten Linie 6 ist in Fig. 1 die Schnittlinie dargestellt, entlang der die Schneide 3 das Material des Schleudergussrohrs 5 schneidet, während der Grundkörper 2 durch das Schleudergussrohr 5 gezogen und gedreht wird.

Es ist aus der Fig. 1 ersichtlich, dass bei einer Ausführungsform, bei der der Grundkörper 2 eine weitere Schneide an seinem Außenumfang aufweist, die auf gleicher Höhe, wie die abgebildete Schneide 3 angeordnet ist, aber an einer anderen Position in Umfangsrichtung, beispielsweise der dargestellten Schneide 3 gegenüberliegend, gleichzeitig ein zweiter helixförmiger Schnitt in das Schleudergussrohr 5 eingebracht wird.

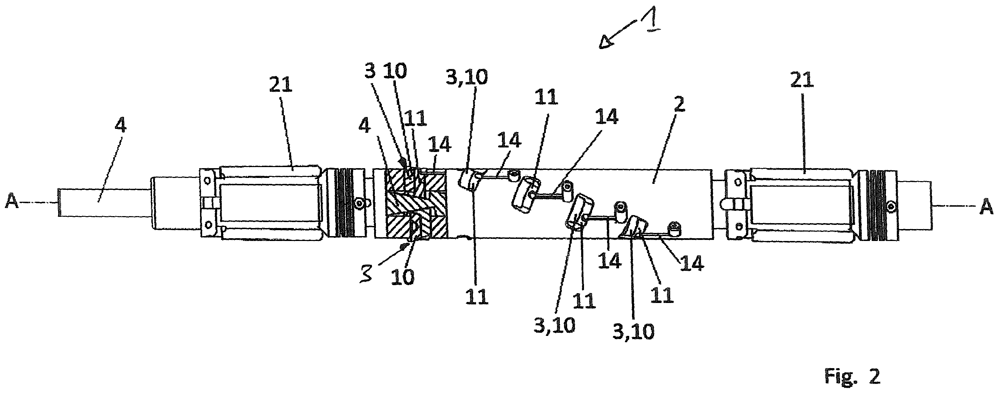

Bei der in Fig. 2 gezeigten Ausführungsform weist das Werkzeug 1 einen Grundkörper 2 auf, an dessen Außenumfang Schneiden 3 ausgebildet sind. Die Schneiden 3 sind an Wendeschneidplatten 10 ausgeführt. Die Wendeschneidplatten 10 sind jeweils lösbar mit einem Teil einer Kassette 11 verbunden, nämlich mit dieser verschraubt. Die Kassette 11 ist verschiebbar in einer Ausnehmung (Tasche) am Grundkörper 2 angeordnet. Sie werden durch Stabfedern 14 in den Ausnehmungen (Taschen) gehalten.

Dem geschnitten dargestellten Bereich der Fig. 2 kann man entnehmen, dass die Schubstange 4 im Bereich der Taschen und der in den Taschen angeordneten Kassetten 11 einen Oberflächenabschnitt 20 aufweist, der in einem Winkel zur Längsachse A des Grundkörpers 2 verläuft. Dabei ist in der in Fig. 2 dargestellten Ausführungsform vorgesehen, dass die Schubstange 4 zwei gegenüberliegende Oberflächenabschnitte 20 aufweist, die jeweils in einem Winkel zur Längsachse A des Grundkörpers 2 verlaufen, da in der in Fig. 2 dargestellten Ausführungsform jeweils auf gleicher Höhe entlang der Längsachse A des Grundkörpers 2 zwei einander gegenüberliegende Schneiden 3 an einander gegenüberliegenden Wendeschneidplatten 10 vorgesehen sind, die jeweils mit einem Teil einer ihnen jeweils zugeordneten Kassette 11 verschraubt sind, wobei sich die jeweilige Kassette 11 in einer ihr jeweils zugeordneten Tasche in dem Grundkörper 2 befindet und sich jeweils an dem ihr zugeordneten Oberflächenabschnitt 20 der Schubstange 4 abstützt.

Dem geschnitten dargestellten Bereich der Fig. 2 kann man entnehmen, dass - wenn die Schubstange 4 relativ zum Grundkörper 2 bewegt wird - die jeweilige Kassette 11 entlang des schief verlaufenden, ihr zugeordneten Oberflächenabschnitts 20 der Schubstange 4 gleitet und damit die Lage der Schneide 3 relativ zur Längsachse A geändert werden kann.

Jeweils fünf Schneiden 3 sind auf unterschiedlicher Höhe entlang der Längserstreckung des Grundkörpers 2 und derart an unterschiedlichen Positionen entlang des Umfangs des Grundkörpers 2 angeordnet, so dass sie auf einer helixförmigen Linie liegen. Jeweils zwei Schneiden sind auf gleicher Höhe entlang der Längserstreckung des Grundkörpers 2, aber an unterschiedlichen Positionen entlang des Umfangs des Grundkörpers 2 angeordnet.

Die Fig. 2 zeigt zudem, dass der Grundkörper 2 des Werkzeugs 1 zwischen zwei Spannzangeneinheiten 21, die federbeaufschlagt sind, gehalten wird.

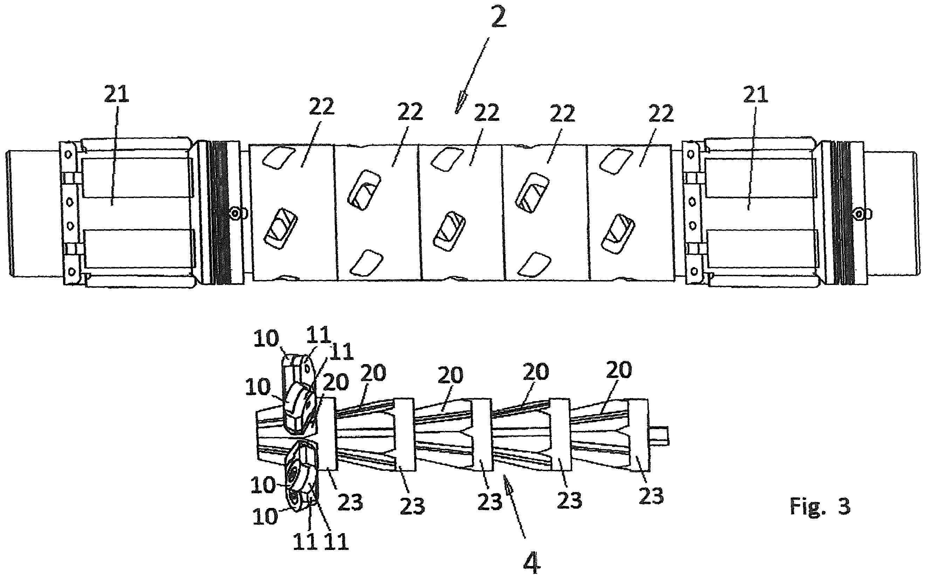

Die Fig. 3 zeigt eine perspektivische Ansicht eines Grundkörpers 2 eines Werkzeugs 1 mit einem Abschnitt einer herausgenommenen Schubstange 4. Zu erkennen ist, dass der Grundkörper 2 aus Unterbaugruppen 22 zusammengesetzt werden kann. Dadurch wird die Möglichkeit geschaffen, die Länge des Grundkörpers 2 und/oder die Anzahl der Schneiden des Grundkörpers 2 auf die gewünschte Bearbeitung anzupassen.

Der in Fig. 3 dargestellte Abschnitt der herausgenommenen Schubstange 4 zeigt, dass auch die Schubstange 4 aus Unterbaugruppen 23 zusammengesetzt werden kann, so dass die Anpassung des Grundkörpers 2 auch durch eine Anpassung der Schubstange 4 abgebildet werden kann. Zudem ist der Fig. 3 gut zu entnehmen, wie die im Winkel zur Längsachse A verlaufenden Oberflächenabschnitte 20 ausgeführt werden können.

Fig. 3 zeigt ferner, dass ein Grundkörper 2 mit fünf Ausnehmungen (Taschen) auf gleicher Höhe entlang der Längserstreckung des Grundkörpers 1 ausgeführt werden kann, in denen jeweils Kassetten 11 mit Wendeschneidplatten 10 angeordnete werden können. Somit können mit einem solchen Grundkörper 2 mit einem Schnitt fünf sich helixförmig entlang der Innenseite des Rohrs erstreckende Ausnehmungen erzeugt werden. Die Kassetten 11 und Wendeschneidplatten 10 sind zur besseren Veranschaulichung einmal an der ganz linken Unterbaugruppe 23 der Schubstange 4 auf den Oberflächenabschnitten 20 aufsitzend dargestellt.

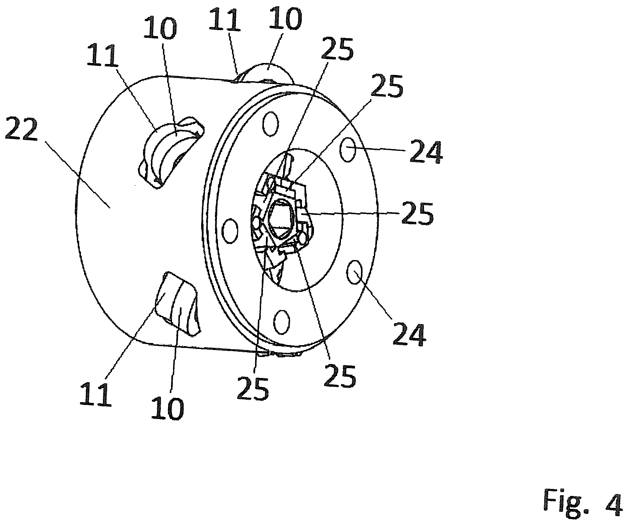

Die Fig. 4 zeigt eine Unterbaugruppe 22 des Grundkörpers 2 gemäß Fig. 3 mit eingeschobener Unterbaugruppe 23 der Schubstange 4. Die Fig. 4 verdeutlicht, dass die Unterbaugruppe 22 des Grundkörpers 2 Durchgangslöcher 24 aufweist, durch die Passschrauben geführt werden, mit denen die einzelnen Unterbaugruppen 22 der Grundkörpers 2 miteinander verbunden werden können

Ferner zeigt die Fig. 4, dass die Unterbaugruppe 23 der Schubstange 4 jeweils als Teil des winkelig verlaufenden Oberflächenabschnitts 20 eine ebenfalls winkelig verlaufende T-förmige Nut 25 aufweist. Die Kassette 11 weist einen (in Fig. 4 nicht dargestellten) T-förmigen Fuß auf, der in die T-förmige Nut 25 eingreift und in dieser verschieblich geführt ist. Zwischen dem T-förmigen Fuß und den übrigen Teilen der Kassette 11 kann eine Feder vorgesehen sein, die auf die übrigen Teile der Kassette 11 relativ zum Fuß in Richtung auf eine Vorzugslage wirkt. Bei einer Bewegung der Schubstange 4 in Längsrichtung A bewegt sich der Fuß innerhalb der T-förmigen Nut 25 und wandert entlang dieser Nut nach außen, so dass die Lage der Kassette 11 relativ zur Längsachse A eingestellt werden kann.

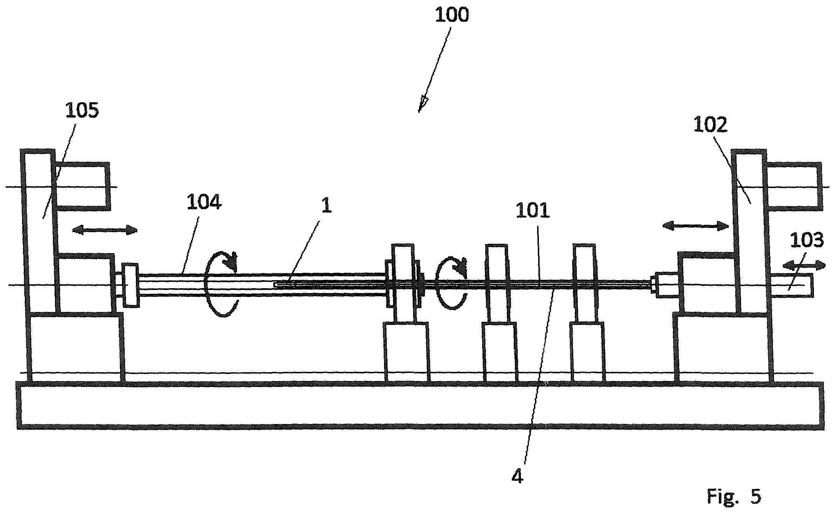

Fig. 5 zeigt eine schematische Seitenansicht auf eine Tieflochbohrmaschine 100. Zu erkennen ist das Werkzeug 1, das über ein Gewinde mit einem Bohrrohr 101 verbunden ist. Eine erster Antriebseinheit 102 kann das Bohrrohr 101 (und damit das mit dem Bohrrohr 101 verbundene Werkzeug 1) drehen und axial schieben (stoßen) oder ziehen. Die Antriebseinheit 102 weist eine Winkelindexierung auf, so dass das Werkstück 1 präzise in einer gewünschten Winkellage in das zu bearbeitende Rohr 104 eingebracht werden kann.

In dem Bohrrohr 101 verläuft die Schubstange 4. An der Antriebseinheit 102 ist eine weitere Antriebseinheit 103 vorgesehen, mit der die axiale Lage der Schubstange 4 relativ zum Grundkörper 2 des Werkzeugs 1 eingestellt werden kann.

In Fig. 1 ist das Werkzeug in einer Position zwischen dem linken Ende des zu bearbeitenden Rohrs 104 und dem rechten Ende des bearbeitenden Rohrs dargestellt. Zum Erzeugen der helixförmig entlang der Innenseite des Rohr 104 verlaufenden Ausnehmung wird das Werkzeug 1 mit eingefahrenen Schneiden 3 zum linken Ende des Rohrs 104 verfahren und dort in eine gewünschte Winkelposition in Umfangsrichtung der Innenseite des Rohrs 104 verbracht. Danach werden die Schneiden 3 durch Axialbewegung der Schubstange 4 relativ zum Grundkörper 2 ausgefahren und danach mit der Tieflochbohrmaschine 100 des Werkzeug 1 durch das Innere des Rohrs 104 gezogen und dabei um seine Längsachse gedreht, dass die Schneiden 3 einen Schnitt entlang einer helixförmigen Schnittlinie auf der Innenseite des Rohrs 104 vollführen.

Die Tieflochbohrmaschine 100 weist eine weitere Antriebseinheit 105 auf, mit der das zu bearbeitende Rohr axial bewegt und gedreht werden kann. Die erfindungsgemäß vorgesehene überlagerte Rotationsbewegung und Axialbewegung des Werkzeugs relativ zum Rohr während des Schneides kann somit über die Antriebseinheit 102 allein oder die Antriebseinheit 105 allein oder durch Kombination der Antriebseinheiten 102, 105 erreicht werden.

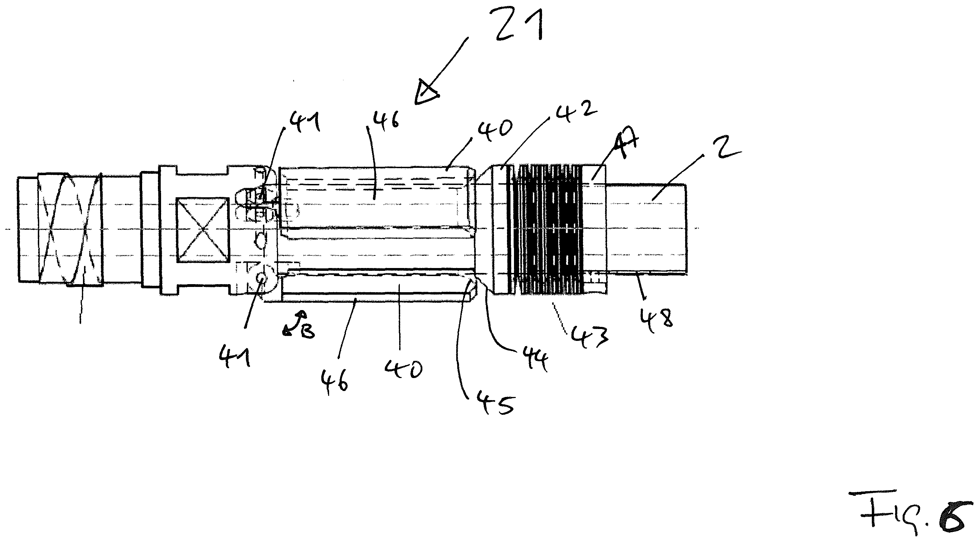

Die in Fig. 6 dargestellte Spannzangeneinheit 21 weist drei Spannzangen 40 auf, die jeweils die Funktion einer Stützplatte übernehmen. Die jeweilige Spannzange 40 ist um eine in Umfangsrichtung des Grundkörpers 2 verlaufende Schwenkachse 41 schwenkbar gelagert (siehe Schwenkpfeil B). Ferner weist die Spannzangeneinheit 21 einen konischen Ring 42 auf, der in axialer Richtung auf dem Außenumfang des Grundkörpers 2 verschiebbar gelagert ist. Der Ring 42 vereint die zu jeder Spannzange 40 vorgesehenen Gegenstücke in einem Element. Der Ring 42 ist durch ein hülsenförmiges Federpaket 43 federbelastet, so dass eine axiale Bewegung des Rings 42 entlang der Außenumfangs des Grundkörpers 2 von einer ersten Position (vgl. Fig. 6) in eine zweite Position (weiter rechts von der in Fig. 6 dargestellten Position) das Federpaket 43 spannt. Der Ring 42 ist mit Spiel auf dem Außenumfang gelagert und kann somit um eine Achse senkrecht zur Längsachse A kippen, sich beispielsweise ausgehend von der in Fig. 6 dargestellten Lage oben mehr nach rechts bewegen, als unten. Dadurch werden über den Umfang des Rings 42 unterschiedliche starke Rückstellkräfte erzeugt.

Der die Gegenstücke zu einem Element vereinende Ring 42 weist eine konisch verlaufende Kontaktfläche 44 auf. Die freien Enden der Spannzangen 40 weisen schräg verlaufende Kontaktfläche 45 auf. Der Einsatz von schrägen Kontaktflächen bewirkt, das bei einer Bewegung der Spannzange 40 auf den Ring 42 zu zunächst ein erster Kontakt zwischen dem freien Ende der Spannzange 40 und dem Ring 42 entsteht und bei einem weiteren Schwenken der Spannzange 40 auf den Außenumfang des Grundkörpers 2 zu ein Gleiten des freien Endes der Spannzange 40 an der Kontaktfläche 44 des Rings 42 entlang eine axiale Bewegung des Gegenstücks bewirkt, die das Federpaket 43 vorspannt. In Fig. 6 wird eine Anordnung dargestellt, bei der die Spannzangen 40 nicht vorgespannt sind; sie liegen an dem Außenumfang des Grundkörpers 2 an. Der Ring 42 und das Widerlager des Federpakets 43 sind so weit nach rechts in der Fig. 6 bewegt worden, dass das Federpacket 43 ausgefedert ist und den Ring 42 nicht gegen das freie Ende der Spannzangen 40 drückt. Diese Einstellung ist die, die den minimalen Durchmesser der Spannzangeneinheit 21 darstellt. Die Fig. 2 und 3 zeigen beispielsweise Ausführungsformen, bei denen die Spannzangen 40 an dem Ring 42 anliegen. Man erkennt, dass die Spannzangen 40 radial über die restlichen Teile des Grundkörpers 2 hinausragen.

Das Schwenken der Spannzangen 40 auf den Außenumfang des Grundkörpers 2 zu erfolgt durch den in Fig. 6 nicht dargestellten Kontakt der radial nach außen weisenden Oberflächen 46 der Spannzangen 40 mit dem Innenumfang des Rohrs. Ein geringerer Innenumfang des Rohres zwingt die Spannzangen 40 weiter nach innen als ein weiter Innenumfang des Rohres. Ersichtlich ist, dass durch das Vorsehen von mehreren Spannzangen 40 auch Abweichung des Innenumfangs des Rohres von einem Kreis aufgefangen werden können.

Endseits des Federpakets 43 ist in Form eines Gewinderings 47 ein Widerlager vorgesehen. Der Gewindering 47 weist ein Innengewinde auf und kann entlang eines auf dem Außenumfang des Grundkörpers 2 vorgesehenen Außengewindes 48 durch Drehen axial bewegt werden. Durch das axiale Verschieben des Gewinderings 47 kann die Vorspannung des Federpakets 43 eingestellt werden.

In der Fig. 6 setzt sich der Grundkörper 2 nach rechts mit dem Teil des Grundkörpers 2 fort, der die Taschen und Kassetten 11 aufweist. Nach links in Fig. 6 ist ein Außengewinde 49 vorgesehen, mit dem der Grundkörper 2 mit dem Bohrrohr 101 verbunden werden kann.

## Patentansprüche

1. Tieflochbohrverfahren zum Herstellen eines Rohrs mit einem Innenprofil, das zumindest eine sich helixförmig entlang der Innenseite des Rohrs erstreckende Ausnehmung aufweist, wobei das Rohr ein Schleudergussrohr (5) ist und das Innenprofil mehrere, nämlich n sich helixförmig entlang der Innenseite des Rohrs erstreckende Ausnehmungen aufweist, **dadurch gekennzeichnet, dass**
• mit einer Tieflochbohrmaschine ein Werkzeug (1), das einen sich entlang einer Längsachse erstreckenden Grundkörper (2) und n am Außenumfang des Grundkörpers (2) angeordnete Schneiden (3) aufweist, durch das Innere des Rohrs gezogen wird und dabei um seine Längsachse (A) gedreht wird und/oder das Rohr um seine Längsachse (A) gedreht wird, so dass die Schneiden (3) einen Schnitt entlang einer helixförmigen Schnittlinie auf der Innenseite des Rohrs vollführen
oder
• das Rohr mit einer Vorrichtung entlang seiner Längsachse (A) über ein Werkzeug (1), das einen sich entlang einer Längsachse erstreckenden Grundkörper (2) und n am Außenumfang des Grundkörpers (2) angeordnete Schneiden (3) aufweist, gestoßen oder gezogen wird und dabei das Rohr gedreht und/oder das Werkzeug (1) um seine Längsachse (A) gedreht wird, so dass die Schneiden (3) einen Schnitt entlang einer helixförmigen Schnittlinie auf der Innenseite des Rohrs vollführen.

2. Tieflochbohrverfahren nach Anspruch 1, **dadurch gekennzeichnet, dass** die sich helixförmig entlang der Innenseite des Rohrs erstreckenden Ausnehmungen durch mehrere Schnitte erzeugt werden, wobei
• das Werkzeug (1) bei jedem Schnitt durch das Innere des Rohrs gezogen wird und dabei um seine Längsachse (A) gedreht wird und/oder das Rohr um seine Längsachse gedreht wird, so dass die Schneiden (3) den jeweiligen Schnitt entlang einer helixförmigen Schnittlinie auf der Innenseite des Rohrs vollführen oder
• das Rohr bei jedem Schnitt über das Werkzeug (1) gezogen oder gestoßen wird und dabei das Rohr um seine Längsachse gedreht und/oder das Werkzeug (1) um seine Längsachse (A) gedreht wird, so dass die Schneiden (3) den jeweiligen Schnitt entlang einer helixförmigen Schnittlinie auf der Innenseite des Rohrs vollführen.

3. Tieflochbohrverfahren nach Anspruch 1 oder 2, **dadurch gekennzeichnet, dass** der radiale Abstand der Schneiden (3) relativ zur Längsachse (A) des Grundkörpers (2) zwischen einem ersten Schnitt und einem zweiten Schnitt geändert wird.

4. Tieflochbohrverfahren nach einem der Ansprüche 1 bis 3, **dadurch gekennzeichnet, dass** ein Bohröl oder Kühlschmiermittel in das Innere des Rohrs eingebracht wird und entgegen der Zug- bzw. Schubrichtung des Werkzeugs (1) durch das Rohr strömt.

5. Tieflochbohrverfahren nach einem der Ansprüche 1 bis 4, **dadurch gekennzeichnet, dass** es mit der Tieflochbohrmaschine durchgeführt wird, wobei die Tieflochbohrmaschine einen Linearantrieb für das Werkzeug und einen Rotationsantrieb für das Werkzeug aufweist, wobei das Werkzeug einen rohrförmigen Grundkörper (2) aufweist und die jeweilige Schneide (3) an einer Wendeschneidplatte (10) ausgeführt ist, wobei die jeweilige Wendeschneidplatte (10) lösbar mit einem Teil einer Kassette (11) verbunden ist, wobei die Kassette (11) relativ zum Grundkörper (2) beweglich ist.

6. Tieflochbohrverfahren nach Anspruch 5, **dadurch gekennzeichnet, dass** die Kassette (11) entlang einer schiefen Ebene, die in einem Winkel zur Längsachse (A) des Grundkörpers (2) steht, verschoben werden kann.

7. Tieflochbohrverfahren nach einem der Ansprüche 5 oder 6, **gekennzeichnet durch** eine am Außenumfang des Grundkörpers (2) vorgesehene Stützplatte (16).

8. Tieflochbohrverfahren nach einem der Ansprüche 5 bis 7, **dadurch gekennzeichnet, dass** der Rotationsantrieb die Schneide (3) in mindestens zwei unterschiedliche Anfangspunkte für einen Schnitt zustellen kann, wobei sich die Anfangspunkte in ihrer Rotationspositionen um die Längsachse (A) unterscheiden.

## Claims

1. Deep-hole drilling method for producing a pipe having an inner profile which has at least one recess extending helically along the inside of the pipe, wherein the pipe is a centrifugal casting pipe (5) and the inner profile has a plurality of recesses, namely n extending helically along the inside of the pipe, **characterized in that**
• with a deep-hole drilling machine, a tool (1), which has a base body (2) extending along a longitudinal axis and n cutting edges (3) arranged on the outer circumference of the base body (2), is pulled through the interior of the pipe and thereby rotated about its longitudinal axis (A) and/or the pipe is rotated about its longitudinal axis (A), such that the cutting edges (3) make a cut along a helical cutting line on the inside of the pipe
or
• the pipe is pushed or pulled with a device along its longitudinal axis (A) via a tool (1), which has a base body (2) extending along a longitudinal axis and n cutting edges (3) arranged on the outer circumference of the base body (2), and, thereby, the pipe is rotated and/or the tool (1) is rotated about its longitudinal axis (A), such that the cutting edges (3) make a cut along a helical cutting line on the inside of the pipe.

2. Deep-hole drilling method according to claim 1, **characterized in that** the recesses extending helically along the inside of the pipe are produced by a plurality of cuts, wherein
• the tool (1) is pulled through the interior of the pipe during each cut and the tool is thereby rotated about its longitudinal axis (A) and/or the pipe is rotated about its longitudinal axis, such that the cutting edges (3) make the respective cut along a helical cutting line on the inside of the pipe
or
• the pipe is pulled or pushed over the tool (1) during each cut and, thereby, the pipe is rotated about its longitudinal axis and/or the tool (1) is rotated about its longitudinal axis (A), such that the cutting edges (3) make the respective cut along a helical cutting line on the inside of the pipe.

3. Deep-hole drilling method according to Claim 1 or 2, **characterized in that** the radial distance of the cutting edges (3) relative to the longitudinal axis (A) of the base body (2) is changed between a first cut and a second cut.

4. Deep-hole drilling method according to one of Claims 1 to 3, **characterized in that** a drilling oil or cooling lubricant is introduced into the interior of the pipe and flows through the pipe counter to the pulling or pushing direction of the tool (1).

5. Deep-hole drilling method according to one of Claims 1 to 4, **characterized in that** it is performed with the deep-hole drilling machine, wherein the deep-hole drilling machine has a linear drive for the tool and a rotary drive for the tool, wherein the tool has a tubular base body (2) and the respective cutting edge (3) is formed on an indexable insert (10), wherein the respective indexable insert (10) is releasably connected to a part of a cassette (11), wherein the cassette (11) is movable relative to the base body (2).

6. Deep-hole drilling method according to Claim 5, **characterized in that** the cassette (11) can be displaced along an inclined plane which is at an angle to the longitudinal axis (A) of the base body (2).

7. Deep-hole drilling method according to one of Claims 5 or 6, **characterized in that** a support plate (16) is provided on the outer circumference of the base body (2).

8. Deep-hole drilling method according to one of Claims 5 to 7, **characterized in that** the rotary drive can feed the cutting edge (3) into at least two different starting points for a cut, wherein the starting points differ in their rotational positions about the longitudinal axis (A).

## Revendications

1. Procédé de perçage profond pour fabriquer un tube avec un profil intérieur qui présente au moins un évidement s'étendant en hélice le long de la face intérieure du tube, le tube étant un tube coulé par centrifugation (5) et le profil intérieur présentant plusieurs, à savoir n évidements s'étendant en hélice le long de la face intérieure du tube, **caractérisé en ce que**
• à l'aide d'une machine de perçage profond, un outil (1) qui présente un corps de base (2) s'étendant le long d'un axe longitudinal et n tranchants (3) disposés sur la périphérie extérieure du corps de base (2), est tiré à travers l'intérieur du tube tout en étant tourné autour de son axe longitudinal (A) et/ou le tube est tourné autour de son axe longitudinal (A) de telle sorte que les tranchants (3) effectuent une coupe le long d'une ligne de coupe hélicoïdale sur la face intérieure du tube ou
• le tube est poussé ou tiré avec un dispositif le long de son axe longitudinal (A) à l'aide d'un outil (1) qui présente un corps de base (2) s'étendant le long d'un axe longitudinal et n tranchants (3) disposés sur la périphérie extérieure du corps de base (2), et le tube et/ou l'outil (1) est tourné autour de son axe longitudinal (A) de telle sorte que les tranchants (3) effectuent une coupe le long d'une ligne de coupe hélicoïdale sur la face intérieure du tube.

2. Procédé de perçage profond selon la revendication 1, **caractérisé en ce que** les évidements s'étendant en hélice le long de la face intérieure du tube sont réalisés par plusieurs tranchants, dans lequel
• l'outil (1) est tiré à chaque coupe à travers l'intérieur du tube tout en étant tourné autour de son axe longitudinal (A) et/ou le tube est tourné autour de son axe longitudinal de telle sorte que les tranchants (3) effectuent la coupe correspondante le long d'une ligne de coupe hélicoïdale sur la face intérieure du tube ou
• le tube est tiré ou poussé à chaque coupe à l'aide de l'outil (1), le tube étant tourné autour de son axe longitudinal et/ou l'outil (1) étant tourné autour de son axe longitudinal (A) de telle sorte que les tranchants (3) effectuent la coupe correspondante le long d'une ligne de coupe hélicoïdale sur la face intérieure du tube.

3. Procédé de perçage profond selon la revendication 1 ou 2, **caractérisé en ce que** la distance radiale des tranchants (3) par rapport à l'axe longitudinal (A) du corps de base (2) est modifiée entre une première coupe et une deuxième coupe.

4. Procédé de perçage profond selon l'une des revendications 1 à 3, **caractérisé en ce qu'une** huile de perçage ou un lubrifiant réfrigérant est introduit à l'intérieur du tube et s'écoule à travers le tube dans le sens opposé à la direction de traction ou de poussée de l'outil (1).

5. Procédé de perçage profond selon l'une des revendications 1 à 4, **caractérisé en ce qu** il est effectué avec une machine de perçage profond, la machine de perçage profond comportant un entraînement linéaire pour l'outil et un entraînement rotatif pour l'outil, l'outil comportant un corps de base tubulaire (2) et le tranchant respectif (3) étant réalisé sur une plaquette amovible (10), la plaquette amovible (10) étant reliée de manière amovible à une partie d'une cassette (11), la cassette (11) étant mobile par rapport au corps de base (2).

6. Procédé de perçage profond selon la revendication 5, **caractérisé en ce que** la cassette (11) peut être déplacée le long d'un plan incliné qui forme un angle par rapport à l'axe longitudinal (A) du corps de base (2).

7. Procédé de perçage profond selon l'une des revendications 5 ou 6, **caractérisé par** une plaque d'appui (16) prévue sur le pourtour extérieur du corps de base (2).

8. Procédé de perçage profond selon l'une des revendications 5 à 7, **caractérisé en ce que** l'entraînement rotatif peut amener le tranchant (3) en au moins deux points de départ différents pour une coupe, les points de départ différant dans leurs positions de rotation autour de l'axe longitudinal (A).
